# EUROPEAN PATENT APPLICATION

(11) **EP 4 615 099 A1**
(43) Date of publication of application: **10.09.2025**
(21) Application number: 23884847.7
(22) Date of filing: 30.10.2023
(51) Int. Cl.: H04W 72/0446

(54) **INDICATION METHOD AND APPARATUS FOR TIME-DOMAIN INFORMATION**

(30) Priority: 04.11.2022 CN 202211380108
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN)
(74) Representative: Studio Torta S.p.A.
(86) International application number: PCT/CN2023/127777
(87) International publication number: WO 2024/093917

(57) **Abstract**

Provided in the embodiments of the present disclosure are an indication method and apparatus for time-domain information. The method, which is applied to a terminal, comprises: receiving downlink control information (DCI) sent by a network device; and determining time-domain configuration information on the basis of the DCI, wherein the time-domain configuration information is used for indicating a transmission direction corresponding to a time unit or whether the time unit is configured with a sub-band.

## Description

### CROSS-REFERENCES TO RELATED APPLICATIONS

The present application claims priority to Chinese patent application No. 202211380108.9 filed on November 04, 2022, entitled "Indication Method and Apparatus for Time-Domain Information", which is hereby incorporated by reference in its entirety.

### FIELD

The present application relates to the field of communications, and in particular, to methods and apparatuses for time domain information indication.

### BACKGROUND

Currently, a flexible symbol is indicated as an uplink symbol or a downlink symbol only through downlink control information (DCI) dynamically indicating a symbol being F indicated by *tdd-UL-DL-configurationCommon*/*tdd-UL-DL-ConfigurationDedicated.* It is impossible to indicate a symbol being an uplink symbol, indicated by *tdd-UL-DL-configurationCommon*/*tdd-UL-DL-ConfigurationDedicated,* as a downlink symbol, nor is it possible to indicate a symbol being a downlink symbol, indicated by *tdd-UL-DL-configurationCommon*/*tdd-UL-DL-ConfigurationDedicated,* as an uplink symbol.

### BRIEF SUMMARY

Embodiments of the present application provide methods and apparatuses for time domain information indication, to solve a problem in the related art and improve flexibility of configuration for a time unit.

An embodiment of the present application provides a method for time domain information indication, performed by a terminal, including:
receiving downlink control information (DCI) sent from a network device; and
determining time domain configuration information based on the DCI, where the time domain configuration information is used to indicate a transmission direction corresponding to a time unit or whether a time unit is configured with a sub-band.

In an embodiment, determining the time domain configuration information based on the DCI includes:
determining the time domain configuration information based on a target indication field in the DCI.

In an embodiment, the target indication field is:
a frequency domain resource allocation field; or
a bit in the DCI; or
a time domain resource allocation field.

In an embodiment, determining the time domain configuration information based on the DCI includes:
determining the time domain configuration information based on a time domain position at which the terminal receives the DCI.

In an embodiment, determining the time domain configuration information based on the time domain position at which the terminal receives the DCI includes:
determining, based on a first rule, time domain configuration information corresponding to the time domain position of the DCI,
where the first rule is a mapping relationship between the time domain position at which the terminal receives the DCI and the time domain configuration information.

In an embodiment, before determining the time domain configuration information based on the DCI, the method further includes:
determining, based on first indication information, that the DCI includes the time domain configuration information.

In an embodiment, determining the time domain configuration information based on the DCI includes:
determining the time domain configuration information based on a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, determining the time domain configuration information based on the data transmission direction and the data transmission information scheduled by the DCI includes at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and a sub-band, determining the time domain configuration information based on the target information, where the sub-band is determined based on first configuration information, and a transmission direction of the sub-band is a second transmission direction.

In an embodiment, in case that the data transmission scheduled by the DCI is the first transmission direction and the category of the symbol where the data transmission is located is the second transmission direction, determining the time domain configuration information based on the first configuration information sent from the network device includes:
in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message; and
in case that the data transmission scheduled by the DCI is the first transmission direction, the category of the symbol where the data transmission is located is the first transmission direction, and the resource conflict exists between the data transmission and the sub-band, determining the time domain configuration information based on the target information includes:
   in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

In an embodiment, the method further includes:
determining, based on second indication information, a time unit in which the time domain configuration information is valid.

In an embodiment, the second indication information includes any or any combination of the following:
a first time period indicated by a first radio resource control (RRC) signaling sent from the network device;
a second time period agreed by a protocol; or
a time period corresponding to a transmission scheduled by the DCI.

A method for time domain information indication, performed by a network device, including:
determining downlink control information (DCI); and
sending the DCI to a terminal,
where the DCI is used by the terminal to determine time domain configuration information, and the time domain configuration information is used to indicate a transmission direction corresponding to a time unit or whether a time unit is configured with a sub-band.

In an embodiment, determining the DCI includes:
determining a target indication field in the DCI, where the target indication field is used to determine the time domain configuration information.

In an embodiment, the target indication field is:
a frequency domain resource allocation field; or
a bit in the DCI; or
a time domain resource allocation field.

In an embodiment, determining the DCI includes:
determining a time domain position at which the terminal receives the DCI, where the time domain position at which the terminal receives the DCI is used to indicate the time domain configuration information.

In an embodiment, determining the time domain position at which the terminal receives the DCI includes:
determining, based on a first rule, a time domain position of the DCI,
where the first rule is a mapping relationship between the time domain position at which the terminal receives the DCI and the time domain configuration information.

In an embodiment, the method further includes:
sending, to the terminal, first indication information used to indicate that the DCI includes the time domain configuration information.

In an embodiment, determining the DCI includes:
determining a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the method further includes: sending first configuration information and/or second configuration information to the terminal, where the first configuration information is used to indicate the time domain configuration information, and the second configuration information is used to indicate a frequency domain resource corresponding to the data transmission.

In an embodiment, the method further includes: sending, to the terminal, a radio resource control (RRC) signaling used to indicate a first time period, where the first time period is used by the terminal to determine a time unit corresponding to the time domain configuration information.

An embodiment of the present application further provides an apparatus for time domain information indication, for use in a terminal, including:
a first receiving unit, used for receiving downlink control information (DCI) sent from a network device; and
a first determining unit, used for determining time domain configuration information based on the DCI, where the time domain configuration information is used to indicate a transmission direction corresponding to a time unit or whether a time unit is configured with a sub-band.

In an embodiment, the first determining unit is used for determining the time domain configuration information based on a target indication field in the DCI.

In an embodiment, the target indication field is:
a frequency domain resource allocation field; or
a bit in the DCI; or
a time domain resource allocation field.

In an embodiment, the first determining unit is used for determining the time domain configuration information based on a time domain position at which the terminal receives the DCI.

In an embodiment, the first determining unit is used for determining, based on a first rule, time domain configuration information corresponding to the time domain position of the DCI,
where the first rule is a mapping relationship between the time domain position at which the terminal receives the DCI and the time domain configuration information.

In an embodiment, the first determining unit is further used for determining, based on first indication information, that the DCI includes the time domain configuration information before determining the time domain configuration information based on the DCI.

In an embodiment, the first determining unit is used for determining the time domain configuration information based on a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the first determining unit is used for, in case that a data transmission scheduled by the DCI is a first transmission direction and a category of the symbol where the data transmission is located is a second transmission direction, determining the time domain configuration information based on first configuration information sent from the network device; and/or
the first determining unit is used for, in case that a data transmission scheduled by the DCI is a first transmission direction, a category of the symbol where the data transmission is located is the first transmission direction, and a resource conflict exists between the data transmission and a sub-band, determining the time domain configuration information based on the target information, where the sub-band is determined based on first configuration information, and a transmission direction of the sub-band is a second transmission direction.

In an embodiment, the first determining unit is used for, in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message; and
the first determining unit is used for, in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

In an embodiment, the first determining unit is further used for determining, based on second indication information, a time unit in which the time domain configuration information is valid.

In an embodiment, the second indication information includes any or any combination of the following:
a first time period indicated by a first radio resource control (RRC) signaling sent from the network device;
a second time period agreed by the protocol; or
a time period corresponding to a transmission scheduled by the DCI.

An embodiment of the present application further provides an apparatus for time domain information indication, for use in a network device, including:
a second determining unit, used for determining downlink control information (DCI); and
a second sending unit, used for sending the DCI to a terminal,
where the DCI is used by the terminal to determine time domain configuration information, and the time domain configuration information is used to indicate a transmission direction corresponding to a time unit or whether a time unit is configured with a sub-band.

In an embodiment, the second determining unit is used for determining a target indication field in the DCI, where the target indication field is used to determine the time domain configuration information.

In an embodiment, the target indication field is:
a frequency domain resource allocation field; or
a bit in the DCI; or
a time domain resource allocation field.

In an embodiment, the second determining unit is used for determining a time domain position at which the terminal receives the DCI, where the time domain position at which the terminal receives the DCI is used to indicate the time domain configuration information.

In an embodiment, the second determining unit is used for determining, based on a first rule, a time domain position of the DCI,
where the first rule is a mapping relationship between the time domain position at which the terminal receives the DCI and the time domain configuration information.

In an embodiment, the second sending unit is further used for sending, to the terminal, first indication information used to indicate that the DCI includes the time domain configuration information.

In an embodiment, the second determining unit is used for determining a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the second sending unit is further used for sending first configuration information and/or second configuration information to the terminal, where the first configuration information is used to indicate the time domain configuration information, and the second configuration information is used to indicate a frequency domain resource corresponding to the data transmission.

In an embodiment, the second sending unit is further used for sending, to the terminal, a radio resource control (RRC) signaling used to indicate a first time period, where the first time period is used by the terminal to determine a time unit corresponding to the time domain configuration information.

An embodiment of the present application further provides a terminal, including a memory, a transceiver and a processor,
where the memory is used for storing a computer program, the transceiver is used for receiving and sending data under control of the processor, and the processor is used for reading a computer program in the memory and performing any of the methods for time domain information indication performed by a terminal described above.

An embodiment of the present application further provides a network device, including a memory, a transceiver and a processor,
where the memory is used for storing a computer program, the transceiver is used for receiving and sending data under control of the processor, and the processor is used for reading a computer program in the memory and performing any of the methods for time domain information indication performed by a network device described above.

An embodiment of the present application further provides a processor-readable storage medium, where the processor-readable storage medium stores a computer program, and the computer program is used to cause a processor to perform any of the methods for time domain information indication performed by a terminal described above or any of the methods for time domain information indication performed by a network device described above.

An embodiment of the present application further provides a processor-readable storage medium, where the processor-readable storage medium stores a computer program, and the computer program is used to cause a processor to perform any of the methods for time domain information indication performed by a network device described above.

In the methods and apparatuses for time domain information indication provided by the embodiments of the present application, the time domain configuration information is used to indicate the transmission direction corresponding to the time unit or whether the time unit is configured with the sub-band. The time unit can be flexibly configured, and the transmission direction within the time unit or whether the sub-band is configured is dynamically indicated, thereby better matching changes in uplink-downlink transmission loads.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a first schematic flowchart of a method for time domain information indication according to an embodiment of the present application;
FIG. 2 is a second schematic flowchart of a method for time domain information indication according to an embodiment of the present application;
FIG. 3 is a first schematic structural diagram of an apparatus for time domain information indication according to an embodiment of the present application;
FIG. 4 is a second schematic structural diagram of an apparatus for time domain information indication according to an embodiment of the present application;
FIG. 5 is a schematic structural diagram of a terminal according to an embodiment of the present application; and
FIG. 6 is a schematic structural diagram of a network device according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

Solutions in embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CNs) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiated protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal device, an access terminal device, a user terminal device, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

To facilitate understanding of embodiments of the present application, the following introduces terms or backgrounds related to the embodiments of the present application.

In the related art, a network configures a cell specific time domain duplex (TDD) uplink (UL)/downlink (DL) configuration, namely a transmission direction type on a slot/symbol, through *tdd-UL-DL-configurationCommon* in a system information block#1 (SIB1), where the transmission direction type includes the following three types:
uplink (UL, also abbreviated as U);
downlink (DL, also abbreviated as D); and
flexible (F).

Accordingly, a category of a symbol can be divided into an uplink symbol (U), a downlink symbol (D) and a flexible symbol (F) based on the transmission direction type.

The network may also only change a F-type symbol of a cell-level configuration to uplink or downlink for a specific user equipment (UE) through *tdd-UL-DL-ConfigurationDedicated.*

The network may also indicate an uplink-downlink direction through downlink control information (DCI), such as dynamically indicating the uplink-downlink direction through DCI_format_2.0. Similarly, DCI format2_0 can only configure a symbol indicated as F in *tdd-UL-DL-configurationCommon*/*tdd-UL-DL-ConfigurationDedicated* as uplink or downlink.

An uplink-downlink slot configuration in the new radio (NR) technology depends on *tdd-UL-DL-configurationCommon, tdd-UL-DL-ConfigurationDedicated* and a slot format indication (SFI), where *tdd-UL-DL-configurationCommon* is a cell-level configuration, *tdd-UL-DL-ConfigurationDedicated* is a UE-specific configuration, and the SFI refers to that a format change of an uplink-downlink slot is indicated through the DCI.

### 1.1 tdd-UL-DL-configurationCommon

A slot configuration in NR is configured in a *tdd-UL-DL-configurationCommon* signaling. For a serving cell, slot information configured by *tdd-UL-DL-configurationCommon* and received by all UEs camping on the serving cell is the same.

### 1.2 tdd-UL-DL-ConfigurationDedicated

*tdd-UL-DL-ConfigurationDedicated* is a UE-specific configuration. *tdd-UL-DL-ConfigurationDedicated* can only modify a flexible symbol in the *tdd-UL-DL-configurationCommon* configuration.

A configuration in *tdd-UL-DL-ConfigurationDedicated* is slot symbol indication array, whose basic element is TDD-UL-DL-SlotConfig, and a position of the slot is determined based on a slotIndex therein. The slot can be indicated as all downlink symbols, all uplink symbols, or a quantity of uplink symbols/a quantity of downlink symbols.

*tdd-UL-DL-ConfigurationDedicated* cannot change a downlink symbol indicated by *tdd-UL-DL-configurationCommon* into an uplink symbol, or change an uplink symbol into a downlink symbol.

In the related art, only a symbol indicated as F in *tdd-UL-DL-configurationCommon*/*tdd-UL-DL-ConfigurationDedicated* can be dynamically indicated as uplink or downlink through DCI format2_0, and a symbol indicated as U/D in *tdd-UL-DL-configurationCommon*/*tdd-UL-DL-ConfigurationDedicated* cannot be indicated as D/U.

In order to solve a coverage, latency and capacity issues of uplink transmission in a TDD mode, related technologies will study a research direction of non-overlapping sub-band full duplex, that is, dividing frequency domain resources into multiple sub-bands that do not overlap with each other, and uplink frequency domain resources and downlink frequency domain resources are located in different sub-bands, which is referred to as full-duplex below.

A current research is based on a situation that the network/a base station side has a capability to perform sending and reception simultaneously (abbreviated as a duplex capability), that is, a base station performs uplink and downlink transmissions with different UEs at the same time; the UE side does not have a duplex capability, that is, the UE can only perform uplink transmission or downlink reception at a certain time.

Therefore, configuration for a time unit in the related art has a problem of poor flexibility.

The present application provides a method for time domain information indication, which can better match a change in uplink-downlink transmission loads and dynamically indicate whether a sub-band is configured or a transmission direction within a time unit such as frame/sub-frame/slot/symbol, etc.

Solutions in embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

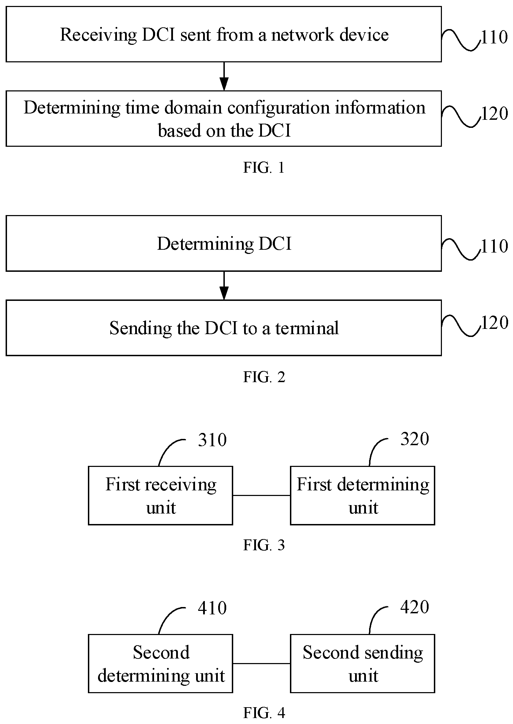

FIG. 1 is a first schematic flowchart of a method for time domain information indication according to an embodiment of the present application. As shown in FIG. 1, an embodiment of the present application provides a method for time domain information indication, performed by a terminal, which includes the following steps.

Step 110: receiving downlink control information (DCI) sent from a network device.

Step 120: determining time domain configuration information based on the DCI, where the time domain configuration information is used to indicate a transmission direction corresponding to a time unit or whether a time unit is configured with a sub-band.

The time domain configuration information is used to indicate a transmission direction corresponding to a time unit or whether a time unit is configured with a sub-band.

In any embodiment of the present application, the time unit may be at least one of a super-frame, a frame, a slot, a sub-frame, a micro-sub-frame, a micro-slot, a symbol, or a time unit less than one symbol. The above is an example for convenience of understanding the present application, and embodiments of the present application do not limit the time unit.

The time domain configuration information may indicate a transmission direction of a time unit, or may indicate whether a time unit is configured with a sub-band.

In any embodiment of the present application, the time domain configuration information may be pre-defined by a protocol, or may be configured through a signaling, such as pre-configured through a radio resource control (RRC) signaling.

For example, the time domain configuration information may indicate sub-band configurations of different sub-frames/slots in one frame, for example, 0011100000 indicates that the third to fifth slots include uplink sub-bands, and other slots do not include an uplink sub-band.

For example, the time domain configuration information may indicate sub-band configurations of different symbols in one slot, for example, 00111000000000 indicates that the third to fifth symbols include uplink sub-bands, and other symbols do not include an uplink sub-band.

For example, the time domain configuration information may indicate transmission directions of different symbols in one slot, for example, 00111000000000 indicates that the third to fifth symbols are uplink, and transmission directions of other symbols are determined based on target information.

The time domain configuration information may be applied to the following multiple time domain ranges:
a time domain range indicated by all slots/RRC;
a predefined time domain range; and
a time domain range corresponding to a flexible sub-band.

For the flexible sub-band, a first symbol may be configured with the flexible sub-band. A symbol capable of configuring the flexible sub-band is the first symbol, and a category of a symbol on the first symbol may be different from a transmission type of a configured sub-band. For example, part of downlink (DL) symbols/flexible symbols may be configured with a flexible uplink sub-band, and correspondingly, part of uplink (UL) symbols/flexible symbols may be configured with a flexible downlink sub-band.

In the method for time domain information indication provided by the embodiment of the present application, the time domain configuration information is used to indicate the transmission direction corresponding to the time unit or whether the time unit is configured with the sub-band. The time unit can be flexibly configured, and the transmission direction within the time unit or whether the sub-band is configured is dynamically indicated, thereby better matching changes in uplink-downlink transmission loads.

In an embodiment, determining the time domain configuration information based on the DCI includes:
determining the time domain configuration information based on a target indication field in the DCI.

In an embodiment, the target indication field is a field used to indicate the time domain configuration information in the DCI. The target indication field can be an existing field in the related art, or a newly added field, such as partial bits of a frequency domain resource allocation (FDRA) field, surplus bits in the FDRA field or in existing DCI, additional bits added on the existing basis, or a time domain resource allocation (TDRA) field. For the FDRA field, the time domain configuration information may be indicated based on partial states of the FDRA field; and for the TDRA field, the TDRA and the time domain configuration information may be joint encoded.

Embodiments of the present application do not limit a type of field, a location of the field, etc., as long as they can indicate the time domain configuration information.

In the method for time domain information indication provided by the embodiment of the present application, the time domain configuration information is indicated through the target indication field. The time domain configuration information can indicate a symbol indicated as D/U in *tdd-UL-DL-configurationCommon*/*tdd-UL-DL-ConfigurationDedicated* as U/D; or the time domain configuration information can configure an uplink/downlink sub-band in a symbol indicated as D/U in *tdd-UL-DL-configurationCommon*/*tdd-UL-DL-ConfigurationDedicated.* The time domain configuration information can also fall back a symbol to a configuration for *tdd-UL-DL-configurationCommon*/*tdd-UL-DL-ConfigurationDedicated* after indicating the symbol indicated as D/U in *tdd-UL-DL-configurationCommon*/*tdd-UL-DL-ConfigurationDedicated* as U/D; or the time domain configuration information may also indicate that an uplink/downlink sub-band configured in a D/U symbol is invalid, and fall back the symbol to a configuration for *tdd-UL-DL-configurationCommon*/*tdd-UL-DL-ConfigurationDedicated.* The time unit is dynamically scheduled based on the DCI, and flexibility of configuration for the time unit is improved.

In an embodiment, the target indication field is:
a frequency domain resource allocation field; or
a bit in the DCI; or
a time domain resource allocation field.

For the frequency domain resource allocation field, it can be implemented by reusing the frequency domain resource allocation field, including reusing part of bits of the FDRA field or part of bit states of the FDRA field.

In an embodiment, for DCI that schedules a physical uplink control channel (PUCCH), considering that a frequency domain range occupied by an UL sub-band is reduced and a corresponding FDRA field is surplus, some bits of the FDRA field and some states indicated by the FDRA field may be reused to indicate a sub-band full duplex (SBFD) configuration.

For example, high X bits of the FDRA field may be reused to indicate M types of time domain configuration information, where M is less than or equal to 2^{X}. For example, X=2, M=4, 00 is used to indicate a first type of time domain configuration information, 01 is used to indicate a second type of time domain configuration information, 10 is used to indicate a third type of time domain configuration information, and 11 is used to indicate a fourth type of time domain configuration information.

For example, the N-th to (N+M)-th states of the FDRA field are reused to indicate M types of time domain configuration information. For example, the N-th state indicates a first type of time domain configuration information, the (N+1)-th state indicates a second type of time domain configuration information, and so on, which are not repeated here.

In an embodiment, for DCI scheduling a physical downlink shared channel (PDSCH), for resource allocation type (RA Type) 0, since bits corresponding to the UL sub-band no longer indicate a DL resource, these bits may be used to indicate the time domain configuration information; and for resource allocation of RA Type 1, resources indicated by some resource indication values (RIVs) correspond to the UL sub-band rather than the DL resources, and these RIV states may be used to indicate the time domain configuration information, that is, bit states corresponding to these RIVs are used to indicate the time domain configuration information.

For example, resource blocks (RBs) indicated by RIVs being equal to 10 to 20 correspond to the UL sub-band. At this time, all or part of RIVs being equal to 10 to 20 are used to indicate the time domain configuration information.

Bits in the DCI may include:
a surplus bit in the DCI; or
an additional bit field used to indicate the time domain configuration information in the DCI.

For the surplus bit in the DCI, the surplus bit (which may be idle) in the DCI is used to indicate the time domain configuration information.

In an embodiment, for an SBFD system, since the SBFD system does not determine a length of the FDRA field based on a bandwidth part (BWP) as in the related art, but determines the length of the FDRA field in the DCI for scheduling the PUSCH based on a size of an UL sub-band within the BWP, and determines a size of the FDRA field in the DCI for scheduling the PDSCH based on a size of resources used for downlink transmission within the BWP. In this case, the required length of the FDRA field is less than the length of the FDRA field determined based on a BWP width, there is a surplus bit in the DCI, and the surplus bit may be used to indicate the time domain configuration information.

For an additional bit field used to indicate the time domain configuration information in the DCI, in case that there is no surplus bit or no surplus bit state, the time domain configuration information may also be indicated by a newly added information bit.

For the time domain resource allocation field, the time domain configuration information may be indicated by jointly encoding the TDRA and the time domain configuration information.

In an embodiment, one new column may be added to the existing TDRA table, and the new column is used to indicate the time domain configuration information.

In the method for time domain information indication provided by the embodiment of the present application, signaling resources can be saved in case that the target indication field is: the frequency domain resource allocation field or the surplus bit in the DCI, and the time domain configuration information can be clearly indicated in case that the target indication field is the newly added bit field in the DCI for indicating the time domain configuration information or the time domain resource allocation field.

In an embodiment, determining the time domain configuration information based on the DCI includes:
determining the time domain configuration information based on a time domain position at which the terminal receives the DCI.

In an embodiment, the time domain configuration information is implicitly indicated by the time domain position of receiving the DCI. The time domain position where the DCI is detected is the time domain position at which the terminal receives the DCI.

The time domain position may include: for example, the n-th slot, recorded as slot n; the k-th symbol, recorded as symbol k; and the m-th frame, recorded as frame m. A corresponding time domain position may be determined for each time unit, which is not repeated here.

In an embodiment, in case that a position at which the DCI is received is slot n, a corresponding time domain configuration is a time domain configuration corresponding to the RRC configured/predefined n-th time domain configuration information.

In an embodiment, determining the time domain configuration information based on the time domain position at which the terminal receives the DCI includes:
determining, based on a first rule, time domain configuration information corresponding to the time domain position of the DCI,
where the first rule is a mapping relationship between the time domain position at which the terminal receives the DCI and the time domain configuration information.

In any embodiment of the present application, the first rule may be notified in advance by a network side, such as pre-configured through an RRC message, or the first rule may also be agreed by the protocol.

Description for the mapping relationship between the time domain position at which the terminal receives the DCI and the time domain configuration information is as follows.

For example, there is a mapping relationship between a time domain position at which the DCI is received (including information about frame m, slot n and/or symbol k) and an RRC configured/predefined index corresponding to the time domain configuration information. For example, index=f(m,n,k), where f represents the mapping relationship. Based on the time domain position at which the DCI is detected and the mapping relationship, the index corresponding to the time domain configuration information is indirectly obtained, and then the time domain configuration information is obtained.

Embodiments of the present application do not limit how to determine the first rule and specific content of the mapping relationship.

In the method for time domain information indication provided by the embodiment of the present application, the time domain configuration information is indicated by the time domain position at which the DCI is received by the terminal. The time domain configuration information can indicate a symbol indicated as D/U in *tdd-UL-DL-configurationCommon*/*tdd-UL-DL-ConfigurationDedicated* as U/D; or the time domain configuration information can configure an uplink/downlink sub-band in a symbol indicated as D/U in *tdd-UL-DL-configurationCommon*/*tdd-UL-DL-ConfigurationDedicated.* The time domain configuration information may also fall back a symbol to a configuration for *tdd-UL-DL-configurationCommon*/*tdd-UL-DL-ConfigurationDedicated* after indicating the symbol indicated as D/U in *tdd-UL-DL-configurationCommon*/*tdd-UL-DL-ConfigurationDedicated* as U/D; or the time domain configuration information may also indicate that an uplink/downlink sub-band configured in a D/U symbol is invalid, and fall back the symbol to a configuration for *tdd-UL-DL-configurationCommon*/*tdd-UL-DL-ConfigurationDedicated.* The time unit is dynamically scheduled based on the DCI, and flexibility of configuration for the time unit is improved.

In an embodiment, before determining the time domain configuration information based on the DCI, the method further includes:
determining, based on first indication information, that the DCI includes the time domain configuration information.

In an embodiment, for the above-mentioned indication method for determining the time domain configuration information based on the target indication field in the DCI, since the target indication field may also be interpreted in other ways, (for example, for a field in FDRA, it is interpreted based on initial provisions of the protocol (that is, interpreted as the frequency domain resource allocation)), interpreting each piece of DCI based on the method provided by the embodiment of the present application may cause unnecessary waste of resources.

Therefore, the network side may send the first indication information to the terminal, and the terminal determines whether the DCI includes the time domain configuration information based on the first indication information.

For the above-mentioned indication method for determining the time domain configuration information based on the target indication field in the DCI, in case that the DCI includes the time domain configuration information, the terminal interprets the DCI based on the method provided by the embodiment of the present application; and in case that the DCI does not include the time domain configuration information, the terminal interprets the DCI based on a legacy method initially specified in the protocol. For the above-mentioned determining the time domain configuration information based on the target indication field in the DCI, the base station may semi-statically indicate, through the RRC, the UE to interpret the DCI based on the legacy method or based on the above-mentioned method, or the base station may dynamically indicate, through a media access control (MAC) control element (CE)/DCI, the UE to interpret the DCI based on the legacy method or based on the above-mentioned method. The first indication information may be indicated directly or indirectly. For direct indication, it refers to that the first indication information directly indicates whether the UE interprets the DCI based on the legacy method or based on the above method; and for indirect indication, it refers to that the UE is indirectly indicated, through other information, whether to interpret the DCI based on the legacy method or based on the above method. For example, the RRC or indication information in the DCI indicates to the UE that the DCI is used for a sub-band full-duplex operation, and the UE determines the time domain configuration information based on the above method. At this time, the first indication information refers to the indication information, in the RRC or the DCI, used to indicate to the UE that the DCI is used for the sub-band full-duplex operation.

For determining the time domain configuration information based on the time domain position at which the terminal receives the DCI, in case that the DCI includes the time domain configuration information, the terminal interprets the DCI based on the method provided by the embodiment of the present application; and in case that the DCI does not include the time domain configuration information, the terminal does not interpret the time domain configuration information. Considering that the UE needs to know whether the time domain configuration information may be determined based on the time domain position information of currently received DCI, the base station needs to indicate, through the first indication information, the UE whether to determine the time domain configuration information based on the above method; and the base station needs to semi-statically indicate, through the RRC, the UE whether to determine the time domain configuration information based on the above method, or dynamically indicate, through the DCI, the UE whether to determine the time domain configuration information based on the above method, where the indication may be a direct indication or an indirect indication. The first indication information may be indicated directly or indirectly. For example, the RRC or the DCI indicates to the UE that the DCI is used for the sub-band full-duplex operation, and the UE determines the time domain configuration information based on the above method. For example, the first indication information is carried in the DCI, and after the UE receives the DCI, the UE determines, based on the first indication information, whether to determine the time domain configuration information based on the time domain position at which the DCI is received.

In any embodiment of the present application, the first indication information may be carried through an RRC message or DCI. The DCI may be DCI indicating time domain configuration information or other DCI.

In an embodiment, determining the time domain configuration information based on the DCI includes:
determining the time domain configuration information based on a data transmission direction and data transmission information scheduled by the DCI.

In an embodiment, the data transmission information includes:
a category of a symbol where a data transmission is located; and/or
a frequency domain resource corresponding to a data transmission.

In an embodiment, the time domain configuration information is determined based on the data transmission direction scheduled by the DCI and the category of the symbol where the data transmission is located. For example, which kind of time domain configuration information is used is determined based on the data transmission direction scheduled by the DCI and the category of the symbol where the data transmission is located.

In an embodiment, the time domain configuration information is determined based on the data transmission direction scheduled by the DCI, the category of the symbol where the data transmission is located, and the frequency domain resource corresponding to the data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

The uplink-downlink configuration common information may be *tdd-UL-DL-configurationCommon;* the uplink-downlink configuration dedicated information may be *tdd-UL-DL-ConfigurationDedicated;* and the slot format indication information may be DCI_Frame2.0_SFI. Introductions for *tdd-UL-DL-configurationCommon*, *tdd-UL-DL-ConfigurationDedicated* and DCI_Frame2.0_SFI may be referred to the above and are not repeated here.

In the method for time domain information indication provided by the embodiment of the present application, the time domain configuration information is indicated through the data transmission direction and the data transmission information scheduled by DCI. The time domain configuration information can indicate a symbol indicated as D/U in *tdd-UL-DL-configurationCommon*/*tdd-UL-DL-ConfigurationDedicated* as U/D; or the time domain configuration information can configure an uplink/downlink sub-band in a symbol indicated as D/U in *tdd-UL-DL-configurationCommon*/*tdd-UL-DL-ConfigurationDedicated.* The time domain configuration information may also fall back a symbol to a configuration for *tdd-UL-DL-configurationCommon*/*tdd-UL-DL-ConfigurationDedicated* after indicating the symbol indicated as D/U in *tdd-UL-DL-configurationCommon*/*tdd-UL-DL-ConfigurationDedicated* as U/D; or the time domain configuration information may also indicate that an uplink/downlink sub-band configured in a D/U symbol is invalid, and fall back the symbol to a configuration for *tdd-UL-DL-configurationCommon*/*tdd-UL-DL-ConfigurationDedicated.* The time unit is dynamically scheduled based on the DCI, and flexibility of configuration for the time unit is improved. In addition, the terminal can determine the time domain configuration information based on the data transmission direction and the data transmission information scheduled by DCI, and can better match changes in uplink-downlink transmission loads.

In an embodiment, determining the time domain configuration information based on the data transmission direction and the data transmission information scheduled by the DCI includes at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and the sub-band, determining the time domain configuration information based on the target information, where a transmission direction of the sub-band is a second transmission direction.

In any embodiment of the present application, the first transmission direction is opposite to the second transmission direction. For example, in case that the first transmission direction is uplink, the second transmission direction is downlink; and in case that the first transmission direction is downlink, the second transmission direction is uplink.

For the case that the data transmission scheduled by the DCI is the first transmission direction and the category of the symbol where the data transmission is located is the second transmission direction, determining the time domain configuration information based on the first configuration information sent from the network device:
a terminal side may receive the first configuration information sent from the network device, where the first configuration information may be carried by an RRC message, and the first configuration information is used to indicate the time domain configuration information configured by the network side for the terminal; and
the terminal receives the DCI and determines that the data transmission scheduled by the DCI is a first transmission direction and a transmission direction of a category of a symbol where a current data transmission is located is the second transmission direction, and the terminal may determine to use the time domain configuration information (i.e., the first configuration information) configured for the terminal by the network side.

In the embodiments of the present application, the time domain indication information can be dynamically activated, the time unit is dynamically scheduled based on the DCI, and flexibility of configuration for the time unit is improved. In addition, the terminal can determine the time domain configuration information based on the data transmission direction and the data transmission information scheduled by the DCI, and can better match changes in uplink-downlink transmission loads.

In an embodiment, in case that the data transmission scheduled by the DCI is the first transmission direction and the category of the symbol where the data transmission is located is the second transmission direction, determining the time domain configuration information based on the first configuration information sent from the network device includes:
in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message.

For example, in case that an UL transmission is scheduled by the DCI in a symbol indicated as downlink in *tdd-UL-DL-configurationCommon*/*tdd-UL-DL-ConfigurationDedicated,* it indicates that the UE activates the time domain configuration information indicated by the RRC from this time unit. An activation period of the time domain configuration information may be configured by the RRC or may be predefined, or a validity period may be until the end of the transmission scheduled by the DCI (for example, in case that the DCI schedules a repetition transmission or a configured grant PUSCH, the validity period of the time domain configuration information lasts until the end of the transmission). There may be only some time units follow the time domain configuration information within the activation period. For example, a time unit corresponding to the received DCI changes from legacy to a configuration indicated by the time domain configuration information, or all time units within the activation period may follow a configuration indicated by the time domain configuration information.

In this embodiment, the first transmission direction is an uplink transmission, and the category of the symbol where the data transmission is located is a downlink time unit. The terminal may determine a category of a symbol corresponding to the data transmission through the target information. In this case, the data transmission scheduled by the DCI is opposite to a transmission direction of the category of the symbol corresponding to the data transmission. The time domain configuration information may be determined based on the first configuration information sent from the network device, and the category of the symbol corresponding to the data transmission may be determined based on the time domain configuration information.

In the embodiments of the present application, the time domain configuration information can be deactivated, that is, the time unit configured by the time domain configuration information is fall back. The time unit is dynamically scheduled based on the DCI, and flexibility of configuration for the time unit is improved. In addition, the terminal can determine the time domain configuration information based on the data transmission direction and the data transmission information scheduled by DCI, and can better match changes in uplink-downlink transmission loads.

For the case that the data transmission scheduled by the DCI is the first transmission direction, the category of the symbol where the data transmission is located is the first transmission direction, and the resource conflict exists between the data transmission and the sub-band, determining the time domain configuration information based on the target information, where the transmission direction of the sub-band is the second transmission direction:
the terminal may receive the first configuration information sent from the network device in advance, where the first configuration information indicates the time domain configuration information, and the time domain configuration information may indicate whether the time unit is configured with a sub-band and/or a transmission direction of the sub-band.

In an embodiment, the terminal may also receive second configuration information sent from the network device, where the second configuration information may be used to indicate a frequency domain resource of the sub-band; and the second configuration information may be carried by an RRC message.

The terminal receives the DCI and determines that the data transmission scheduled by the DCI is a first transmission direction and a transmission direction of a category of a symbol where a current data transmission is located is a first transmission direction. The transmission direction of the data transmission scheduled by the DCI is the same as the transmission direction of the category of the symbol where the data transmission is located, but the frequency domain resource corresponding to the data transmission and the frequency domain resource corresponding to the sub-band have a resource conflict in partial resources or full resources. At this time, the terminal may determine to adopt the target information as the time domain configuration information.

In the embodiments of the present application, it is equivalent to adopting the target information as the time domain configuration information. Dynamic falling back of the time unit is configured, and flexibility of configuration for the time unit is improved.

In an embodiment, in case that the data transmission scheduled by the DCI is the first transmission direction, the category of the symbol where the data transmission is located is the first transmission direction, and the resource conflict exists between the data transmission and the sub-band, determining the time domain configuration information based on the target information includes:
in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to the uplink sub-band, determining the time domain configuration information based on the target information.

In an embodiment, the data transmission scheduled by the DCI is a downlink reception, the category of the symbol where the data transmission is located is a downlink reception, and the category of the symbol where the data transmission is located is indicated by the target information. The transmission direction of the data transmission scheduled by DCI is the same as the transmission direction of the category of the symbol where the data transmission is located, but a frequency domain resource corresponding to the downlink reception are partially or completely conflicting with the frequency domain resource corresponding to the uplink sub-band. At this time, the time domain configuration information is determined based on the target information. For example, in case that a DL transmission is scheduled on an UL sub-band of slot n, within a subsequent period, this slot falls back to all DL symbols within a BWP/carrier range, and the period can be configured by the base station through the RRC or pre-defined. The UE falls back to a legacy TDD configuration for all or part of time units within the period. For example, in slot n, the UE receives a DL transmission scheduled on the UL sub-band, and within a subsequent period, some or all of the slots are restored to the legacy TDD configuration.

In the embodiments of the present application, it is equivalent to adopting the target information as the time domain configuration information. After the first configuration information indicates that a symbol configured as D in *tdd-UL-DL-configurationCommon*/*tdd-UL-DL-ConfigurationDedicated* is configured as U, the symbol U is fall back to D. Flexibility of configuration for the time unit is improved.

In an embodiment, the method further includes:
determining, based on second indication information, a time unit in which the time domain configuration information is valid.

In an embodiment, the time unit in which the time domain configuration information is valid may be determined based on the second indication information. The terminal activates the time domain configuration information sent from the network device from a valid time unit, that is, from the valid time unit, the terminal uses the time domain configuration information sent from the network device to perform time domain configuration on the time unit indicated by the time domain configuration information.

In an embodiment, the second indication information may indicate the activation period of the time domain configuration information. The time domain configuration information is valid during the activation period.

In an embodiment, the second indication information includes any or any combination of the following:
a first time period indicated by a first radio resource control (RRC) signaling sent from the network device;
a second time period agreed by the protocol; or
a time period corresponding to a transmission scheduled by the DCI.

In an embodiment, the network device may send the first RRC signaling to the terminal, where the first RRC signaling is used to indicate a first time period, and the terminal may activate the time domain configuration information within the first time period.

For a second time period agreed by the protocol, it refers to that the second time period is agreed by the protocol, and the terminal may activate the time domain configuration information within the second time period.

The time period corresponding to the transmission scheduled by the DCI refers to the duration from the start of the data transmission scheduled by the DCI to the end of the data transmission scheduled by the DCI. The terminal may activate the time domain configuration information within the time period corresponding to the transmission scheduled by the DCI.

The first time period indicated by the first RRC signaling sent from the network device, the second time period agreed by the protocol, or the time period corresponding to the transmission scheduled by the DCI may be the activation period of the time domain configuration information.

In an embodiment, in case that the DCI schedules a repetition transmission or a configured grant PUSCH, the time domain configuration information is valid until the end of the transmission. Being valid means that the time domain configuration information is in an activated state, that is, the terminal adopts the time domain configuration information.

In an embodiment, there may be only some time units are configured based on the time domain configuration information within the activation period. For example, the time unit corresponding to the received DCI changes from legacy to a configuration indicated by the time domain configuration information, or all time units within the activation period may be configured based on the time domain configuration information.

FIG. 2 is a second schematic flowchart of a method for time domain information indication according to an embodiment of the present application. As shown in FIG. 2, an embodiment of the present application provides a method for time domain information indication, performed by a network side, which includes the following steps.

Step 210: determining downlink control information (DCI).

Sending the DCI to a terminal.

The DCI is used by the terminal to determine time domain configuration information, and the time domain configuration information is used to indicate a transmission direction corresponding to a time unit or whether a time unit is configured with a sub-band.

Introduction of the time domain configuration information may be referred to the above introduction and is not repeated here.

In the method for time domain information indication provided by the embodiment of the present application, the time domain configuration information is used to indicate the transmission direction corresponding to the time unit or whether the time unit is configured with the sub-band. The time unit can be flexibly configured, and the transmission direction within the time unit or whether the sub-band is configured is dynamically indicated, thereby better matching changes in uplink-downlink transmission loads.

In an embodiment, determining the DCI includes:
determining a target indication field in the DCI, where the target indication field is used to determine the time domain configuration information.

In an embodiment, the target indication field is a field used to indicate the time domain configuration information in the DCI. The target indication field can be an existing field in the related art, or a newly added field, such as partial bits of a frequency domain resource allocation (FDRA) field, surplus bits in the FDRA field or in existing DCI, additional bits added on the existing basis, or a time domain resource allocation (TDRA) field. For the FDRA field, the time domain configuration information may be indicated based on partial states of the FDRA field; and for the TDRA field, the TDRA and the time domain configuration information may be joint encoded.

The network side, such as a base station, may determine the target indication field in the DCI, to indicate the time domain configuration information through the target indication field.

In the method for time domain information indication provided by the embodiment of the present application, the time domain configuration information is indicated through the target indication field. The time domain configuration information can indicate a symbol indicated as D/U in *tdd-UL-DL-configurationCommon*/*tdd-UL-DL-ConfigurationDedicated* as U/D; or the time domain configuration information can configure an uplink/downlink sub-band in a symbol indicated as D/U in *tdd-UL-DL-configurationCommon*/*tdd-UL-DL-ConfigurationDedicated.* The time domain configuration information may also fall back a symbol to a configuration for *tdd-UL-DL-configurationCommon*/*tdd-UL-DL-ConfigurationDedicated* after indicating the symbol indicated as D/U in *tdd-UL-DL-configurationCommon*/*tdd-UL-DL-ConfigurationDedicated* as U/D; or the time domain configuration information may also indicate that an uplink/downlink sub-band configured in a D/U symbol is invalid, and fall back the symbol to a configuration for *tdd-UL-DL-configurationCommon*/*tdd-UL-DL-ConfigurationDedicated.* The time unit is dynamically scheduled based on the DCI, and flexibility of configuration for the time unit is improved.

In an embodiment, the target indication field is:
a frequency domain resource allocation field; or
a bit in the DCI; or
a time domain resource allocation field.

Introduction of the frequency domain resource allocation field, the bit in the DCI and the time domain resource allocation field may be referred to the above introduction and is not repeated here.

In the method for time domain information indication provided by the embodiment of the present application, signaling resources can be saved in case that the target indication field is: the frequency domain resource allocation field or the surplus bit in the DCI, and the time domain configuration information can be clearly indicated in case that the target indication field is the newly added bit field in the DCI for indicating the time domain configuration information or the time domain resource allocation field.

In an embodiment, determining the DCI includes:
determining a time domain position at which the terminal receives the DCI, where the time domain position at which the terminal receives the DCI is used to indicate the time domain configuration information.

In an embodiment, the time domain position at which the terminal receives the DCI may be the time domain position at which the base station expects the terminal to receive the DCI.

In an embodiment, the time domain configuration information is implicitly indicated by the time domain position at which the base station expects the terminal to receive the DCI.

For example, in case that the base station expects that the terminal receives the DCI at a position of slot n, the corresponding time domain configuration information is the RRC configured/predefined n-th time domain configuration information configured.

In an embodiment, determining the time domain position at which the terminal receives the DCI includes:
determining, based on a first rule, a time domain position of the DCI,
where the first rule is a mapping relationship between the time domain position at which the terminal receives the DCI and the time domain configuration information.

For example, there is a mapping relationship between the time domain position (including information about frame m, slot n and/or symbol k) at which the base station expects the terminal to receive the DCI and an RRC configured/predefined time domain configuration index. For example, index=f(m,n,k). Based on the time domain position at which the DCI is detected and the mapping relationship, the time domain configuration information is indirectly obtained.

In an embodiment, the method further includes:
sending, to the terminal, first indication information used to indicate that the DCI includes the time domain configuration information.

For a case that the time domain configuration information is determined based on the target indication field, in case that the DCI includes the time domain configuration information, the terminal interprets the DCI based on the method provided by the embodiment of the present application; and in case that the DCI does not include the time domain configuration information, the terminal interprets the DCI based on a legacy method initially specified in the protocol. For the above-mentioned determining the time domain configuration information based on the target indication field in the DCI, the base station may semi-statically indicate, through the RRC, the UE to interpret the DCI based on the legacy method or based on the above-mentioned method, or the base station may dynamically indicate, through a media access control (MAC) control element (CE)/DCI, the UE to interpret the DCI based on the legacy method or based on the above-mentioned method. The first indication information may be indicated directly or indirectly. For direct indication, it refers to that the first indication information directly indicates whether the UE interprets the DCI based on the legacy method or based on the above method; and for indirect indication, it refers to that the UE is indirectly indicated, through other information, whether to interpret the DCI based on the legacy method or based on the above method. For example, the RRC or indication information in the DCI indicates to the UE that the DCI is used for a sub-band full-duplex operation, and the UE determines the time domain configuration information based on the above method. At this time, the first indication information refers to the indication information, in the RRC or the DCI, used to indicate to the UE that the DCI is used for the sub-band full-duplex operation.

For a case that the time domain configuration information is indicated based on the time domain position at which the terminal receives the DCI, in case that the DCI includes the time domain configuration information, the terminal interprets the DCI based on the method provided by the embodiment of the present application; and in case that the DCI does not include the time domain configuration information, the terminal does not interpret the time domain configuration information. Considering that the UE needs to know whether the time domain configuration information may be determined based on the time domain position information of currently received DCI, the base station needs to indicate, through the first indication information, the UE whether to determine the time domain configuration information based on the above method; and the base station needs to semi-statically indicate, through RRC, the UE whether to determine the time domain configuration information based on the above method, or dynamically indicate, through the DCI, the UE whether to determine the time domain configuration information based on the above method, where the indication may be a direct indication or an indirect indication. The first indication information may be indicated directly or indirectly. For example, the RRC or the DCI indicates to the UE that the DCI is used for the sub-band full-duplex operation, and the UE determines the time domain configuration information based on the above method. For example, the first indication information is carried in the DCI, and after the UE receives the DCI, the UE determines, based on the first indication information, whether to determine the time domain configuration information based on the time domain position at which the DCI is received.

In an embodiment, the first indication information may be carried through an RRC message or DCI. The DCI may be DCI indicating time domain configuration information or other DCI.

In an embodiment, determining the DCI includes:
determining a data transmission direction and data transmission information scheduled by the DCI.

In an embodiment, the time domain configuration information is indicated by the data transmission direction scheduled by the DCI for dynamic scheduling and the category of the symbol where the data transmission is located.

In an embodiment, the data transmission information includes:
a category of a symbol where a data transmission is located; and/or
a frequency domain resource corresponding to a data transmission.

In an embodiment, the time domain configuration information is determined based on the data transmission direction scheduled by the DCI and the category of the symbol where the data transmission is located. For example, which kind of time domain configuration information is used is determined based on the data transmission direction scheduled by the DCI and the category of the symbol where the data transmission is located.

In an embodiment, the time domain configuration information is determined based on the data transmission direction scheduled by the DCI, the category of the symbol where the data transmission is located, and the frequency domain resource corresponding to the data transmission.

In an embodiment, the time domain configuration information may be indicated by the data transmission direction scheduled by the DCI for dynamic scheduling and the category of the symbol where the data transmission is located, where the category of the symbol is indicated as uplink or downlink by *tdd-UL-DL-configurationCommon*/*tdd-UL-DL-ConfigurationDedicated,* or is a symbol obtained by indicating a symbol indicated as uplink/downlink by *tdd-UL-DL-configurationCommon*/*tdd-UL-DL-ConfigurationDedicated* to be downlink/uplink.

The DCI is used to schedule an uplink transmission, and the target information indicates that the category of the symbol where the uplink transmission is located is downlink. The time domain configuration information is determined based on first configuration information, where the network device indicates the first configuration information through the RRC.

In case that an UL transmission is scheduled by the DCI in a symbol indicated as downlink in *tdd-UL-DL-configurationCommon*/*tdd-UL-DL-ConfigurationDedicated,* it indicates that the UE activates the time domain configuration information indicated by the RRC from this time unit. An activation period of the time domain configuration information may be configured by the RRC or predefined, or a validity period may be until the end of the transmission scheduled by the DCI (for example, in case that the DCI schedules a repetition transmission or a configured grant PUSCH, the validity period of the time domain configuration information lasts until the end of the transmission). There may be only some time units follow the time domain configuration information within the activation period. For example, a time unit corresponding to the received DCI changes from legacy to a configuration indicated by the time domain configuration information, or all time units within the activation period may follow a configuration indicated by the time domain configuration information.

The DCI is used to schedule a downlink reception, the target information indicates that the category of the symbol where the uplink transmission is located is downlink, a frequency domain resource corresponding to the downlink reception entirely or partially overlaps with a frequency domain resource corresponding to an uplink sub-band, and the time domain configuration information is determined based on the target indication information, where the network indicates the frequency domain resource corresponding to the uplink sub-band through the RRC.

In case that a DL transmission is scheduled on an UL sub-band of slot n, within a subsequent period, this slot falls back to all DL symbols within a BWP/carrier range, and the period can be configured by the base station through the RRC or pre-defined. The UE falls back to a legacy TDD configuration for all or part of time units within the period. For example, in slot n, the UE receives a DL transmission scheduled on the UL sub-band, and within a subsequent period, some or all of the slots are restored to the legacy TDD configuration.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

Introduction of the uplink-downlink configuration common information, the uplink-downlink configuration dedicated information and the SFI information may be referred to the above introduction and is not repeated here.

In an embodiment, the method further includes: sending first configuration information and/or second configuration information to the terminal, where the first configuration information is used to indicate the time domain configuration information, and the second configuration information is used to indicate a frequency domain resource corresponding to the data transmission.

In an embodiment, the method further includes: sending, to the terminal, an RRC signaling used to indicate a first time period, where the first time period is used by the terminal to determine a time unit corresponding to the time domain configuration information.

For example, in case that an UL transmission is scheduled by the DCI in a symbol indicated as downlink in *tdd-UL-DL-configurationCommon*/*tdd-UL-DL-ConfigurationDedicated,* it indicates that the UE activates the time domain configuration information indicated by the RRC from this time unit. An activation period of the time domain configuration information may be configured by the RRC or may be predefined, or a validity period may be until the end of the transmission scheduled by the DCI (for example, in case that the DCI schedules a repetition transmission or a configured grant PUSCH, the validity period of the time domain configuration information lasts until the end of the transmission). There may be only some time units follow the time domain configuration information within the activation period. For example, a time unit corresponding to the received DCI changes from legacy to a configuration indicated by the time domain configuration information, or all time units within the activation period may follow a configuration indicated by the time domain configuration information.

In case that a DL transmission is scheduled on an UL sub-band of slot n, within a subsequent period, this slot falls back to all DL symbols within a BWP/carrier range, and the period can be configured by the base station through the RRC or pre-defined. The UE falls back to a legacy TDD configuration for all or part of time units within the period. For example, in slot n, the UE receives a DL transmission scheduled on the UL sub-band, and within a subsequent period, some or all of the slots are restored to the legacy TDD configuration.

The method for time domain information indication provided by the present application is introduced below in conjunction with multiple embodiments.

Embodiment 1: time domain configuration information is indicated by using a target indication field in DCI for dynamic scheduling

Some bits of an FDRA field or some states indicated by an FDRA field may be reused, or surplus bits in the DCI may be reused, or additional bits may be added on the existing basis, to indicate the time domain configuration information, or the TDRA and the time domain configuration information are jointly encoded.
(1) The target indication field is a frequency domain resource allocation field.

For DCI scheduling a PUSCH, considering that a frequency domain range occupied by an UL sub-band is reduced, a corresponding FDRA field is surplus, and some bits of the FDRA field and/or some states indicated by the FDRA field may be reused to indicate an SBFD configuration.

For example, high X bits of the FDRA field may be reused to indicate M types of time domain configuration information, where M is less than or equal to 2^{X}. For example, X=2, M=4, 00 is used to indicate a first type of time domain configuration information, 01 is used to indicate a second type of time domain configuration information, 10 is used to indicate a third type of time domain configuration information, and 11 is used to indicate a fourth type of time domain configuration information. Or, the N-th to (N+M)-th states of the FDRA field are reused to indicate M types of time domain configuration information. For example, the N-th state indicates a first type of time domain configuration information, the (N+1)-th state indicates a second type of time domain configuration information, and so on.

(2) The target indication field is a bit in the DCI.

In an embodiment, the bit in the DCI may be a surplus bit or a newly added bit.

For DCI scheduling a PDSCH, for RA Type0, since bits corresponding to the UL sub-band no longer indicate a DL resource, these bits may be used to indicate the time domain configuration information; for resource allocation of RA Type 1, resources indicated by some RIVs correspond to an UL sub-band rather than the DL resources, and these RIV states may be considered to be used to indicate the time domain configuration information. For example, RBs indicated by RIVs being equal to 10 to 20 correspond to the UL sub-band. At this time, all or part of RIVs being equal to 10 to 20 are used to indicate the time domain configuration information.

For an SBFD system, since a length of the FDRA field is not determined based on a BWP as in the related art, but the length of the FDRA field in the DCI for scheduling the PUSCH is determined based on a size of an UL sub-band within the BWP, and a size of the FDRA field in the DCI for scheduling the PDSCH is determined based on a size of resources used for downlink transmission within the BWP. Considering that the length of the FDRA field is less than the length of the FDRA field determined based on a BWP width, there is a surplus bit in the DCI, and the surplus bit is used to indicate the time domain configuration information.

In case that there is no surplus bit or no surplus bit state, the time domain configuration information may also be indicated by a newly added information bit.

(3) The target indication field is a time domain resource allocation field.

For a method for joint encoding the TDRA and the time domain configuration information, one new column may be added to the existing TDRA table, to indicate the time domain configuration information.

For the indication method in the above-mentioned embodiment 1, the base station needs to semi-statically indicate, through an RRC, the UE to interpret the DCI based on a legacy method or based on the above-mentioned method, or dynamically indicate, through the DCI, the UE to interpret the DCI based on the legacy method or based on the above-mentioned method, where the indication may be a direct indication or an indirect indication. For direct indication, it refers to that the UE is directly indicated whether the UE interprets the DCI based on the legacy method or based on the above method; and for indirect indication, it refers to that the UE is indirectly indicated, through other information, whether to interpret the DCI based on the legacy method or based on the above method. For example, the RRC or the DCI indicates to the UE that the DCI is used for a sub-band full-duplex operation, and the UE determines the time domain configuration information based on the above method.

In an embodiment, the time domain configuration information may be pre-defined by the protocol or pre-configured through the RRC. The time domain configuration information may indicate transmission directions of different slots in one frame, for example, 0011100000 indicates that the third to fifth slots include an uplink sub-band, and other slots do not include an uplink sub-band; or the time domain configuration information may indicate transmission directions of different symbols in one slot, for example, 00111000000000 indicates that the third to fifth symbols include an uplink sub-band, and other symbols do not include an uplink sub-band.

The time domain configuration information may indicate a symbol configured as D/U in *tdd-UL-DL-configurationCommon*/*tdd-UL-DL-ConfigurationDedicated* as U/D; or after indicating a symbol configured as D/U in *tdd-UL-DL-configurationCommon*/*tdd-UL-DL-ConfigurationDedicated* as U/D, it may fall back the symbol to a configuration for *tdd-UL-DL-configurationCommon*/*tdd-UL-DL-ConfigurationDedicated* through indication information.

Embodiment 2: time domain configuration information is indicated by a time domain position at which DCI is received by a terminal.

The time domain configuration information is implicitly indicated through the time domain position at which the DCI is detected.

In an embodiment, in case that a position at which the DCI is detected is slot n, a corresponding time domain configuration is the RRC configured/predefined n-th time domain configuration.

In an embodiment, there is a mapping relationship between a time domain position at which the DCI is detected (including information about frame m, slot n and/or symbol k) and an RRC configured/predefined time domain configuration index. For example, index=f(m,n,k). Based on the time domain position at which the DCI is detected and the mapping relationship, the time domain configuration information is indirectly obtained.

For the indication method in the above-mentioned embodiment 2, the base station needs to semi-statically indicate, through the RRC, the UE whether to determine the time domain configuration information based on the above-mentioned method, or the base station needs to dynamically indicate, through DCI, the UE whether to determine the time domain configuration information based on the above-mentioned method. The indication may be direct indication or indirect indication. For direct indication, the indication information indicates that the UE determines the time domain configuration information based on the above-mentioned method; and for indirect indication, the UE is indirectly indicated, through other information, to determine the time domain configuration information based on the above-mentioned method. For example, the RRC or the DCI indicates to the UE that the DCI is used for the sub-band full-duplex operation, and the UE determines the time domain configuration information based on the above method.

The time domain configuration information may indicate a symbol configured as D/U in *tdd-UL-DL-configurationCommon*/*tdd-UL-DL-ConfigurationDedicated* as U/D; or after indicating a symbol configured as D/U in *tdd-UL-DL-configurationCommon*/*tdd-UL-DL-ConfigurationDedicated* as U/D, it may fall back the symbol to a configuration for *tdd-UL-DL-configurationCommon*/*tdd-UL-DL-ConfigurationDedicated* through indication information.

Embodiment 3: time domain configuration information is indicated through a data transmission direction and data transmission information scheduled by DCI.

In an embodiment, the time domain configuration information may be indicated through the data transmission direction scheduled by the DCI for dynamic scheduling and the category of the symbol where the data transmission is located. The category of the symbol is indicated as uplink or downlink by *tdd-UL-DL-configurationCommon*/*tdd-UL-DL-ConfigurationDedicated,* or is a symbol obtained by indicating a symbol indicated as uplink/downlink by *tdd-UL-DL-configurationCommon*/*tdd-UL-DL-ConfigurationDedicated* to be downlink/uplink.

In case that an UL transmission is scheduled by the DCI in a symbol indicated as downlink in *tdd-UL-DL-configurationCommon*/*tdd-UL-DL-ConfigurationDedicated,* it indicates that the UE activates the time domain configuration information indicated by the RRC from this time unit. An activation period of the time domain configuration information may be configured by the RRC or predefined, or a validity period may be until the end of the transmission scheduled by the DCI (for example, in case that the DCI schedules a repetition transmission or a configured grant PUSCH, the validity period of the time domain configuration information lasts until the end of the transmission). There may be only some time units perform configuration based on the time domain configuration information within the activation period. For example, a time unit corresponding to the received DCI changes from legacy to a configuration indicated by the time domain configuration information, or all time units within the activation period may perform configuration based on the time domain configuration information.

In case that a DL transmission is scheduled on an UL sub-band of slot n, within a subsequent period, this slot falls back to all DL symbols within a BWP/carrier range, and the period can be configured by the base station through the RRC or pre-defined. The UE falls back to a legacy TDD configuration for all or part of time units within the period. For example, in slot n, the UE receives a DL transmission scheduled on the UL sub-band, and within a subsequent period, some or all of the slots are restored to the legacy TDD configuration.

Referring to FIG. 3, FIG. 3 is a first schematic structural diagram of an apparatus for time domain information indication according to an embodiment of the present application. An embodiment of the present application provides an apparatus for time domain information indication, which is for use in a terminal. The apparatus includes a first receiving unit 310 and a first determining unit 320,
where the first receiving unit 310 is used for receiving downlink control information (DCI) sent from a network device; and
the first determining unit 320 is used for determining time domain configuration information based on the DCI, where the time domain configuration information is used to indicate a transmission direction corresponding to a time unit or whether a time unit is configured with a sub-band.

In an embodiment, the first determining unit 320 is used for determining the time domain configuration information based on a target indication field in the DCI.

In any embodiment of the present application, the target indication field is:
a frequency domain resource allocation field; or
a bit in the DCI; or
a time domain resource allocation field.

In any embodiment of the present application, the first determining unit 320 is used for determining the time domain configuration information based on a time domain position at which the terminal receives the DCI.

In any embodiment of the present application, the first determining unit 320 is used for determining, based on a first rule, time domain configuration information corresponding to the time domain position of the DCI,
where the first rule is a mapping relationship between the time domain position at which the terminal receives the DCI and the time domain configuration information.

In any embodiment of the present application, the first determining unit 320 is further used for determining, based on first indication information, that the DCI includes the time domain configuration information before determining the time domain configuration information based on the DCI.

In any embodiment of the present application, the first determining unit 320 is used for determining the time domain configuration information based on a data transmission direction and data transmission information scheduled by the DCI.

In any embodiment of the present application, the data transmission information includes:
a category of a symbol where a data transmission is located; and/or
a frequency domain resource corresponding to a data transmission.

In any embodiment of the present application, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the first determining unit 320 is used for, in case that a data transmission scheduled by the DCI is a first transmission direction and a category of the symbol where the data transmission is located is a second transmission direction, determining the time domain configuration information based on first configuration information sent from the network device; and/or
the first determining unit 320 is used for, in case that a data transmission scheduled by the DCI is a first transmission direction, a category of the symbol where the data transmission is located is the first transmission direction, and a resource conflict exists between the data transmission and a sub-band, determining the time domain configuration information based on the target information, where the sub-band is determined based on first configuration information, and a transmission direction of the sub-band is a second transmission direction.

In an embodiment, the first determining unit 320 is used for, in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message; and
the first determining unit 320 is used for, in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

In an embodiment, the first determining unit 320 is further used for determining, based on second indication information, a time unit in which the time domain configuration information is valid.

In an embodiment, the second indication information includes any or any combination of the following:
a first time period indicated by a first radio resource control (RRC) signaling sent from the network device;
a second time period agreed by a protocol; or
a time period corresponding to a transmission scheduled by the DCI.

Methods and apparatuses provided by each embodiment of the present application are based on the same concept. Since principles of solving problems by a method for time domain information indication performed by a terminal and an apparatus for time domain information indication for use in a terminal are similar and may achieve the same effects, implementation of the apparatus and the method may refer to each other and repetitions are not repeated.

Referring to FIG. 4, FIG. 4 is a second schematic structural diagram of an apparatus for time domain information indication according to an embodiment of the present application. An embodiment of the present application provides an apparatus for time domain information indication, which is for use in a network side. The apparatus includes: a second determining unit 410 and a second sending unit 420,
where the second determining unit 410 is used for determining downlink control information (DCI); and
the second sending unit 420 is used for sending the DCI to a terminal,
where the DCI is used by the terminal to determine time domain configuration information, and the time domain configuration information is used to indicate a transmission direction corresponding to a time unit or whether a time unit is configured with a sub-band.

In an embodiment, the second determining unit 410 is used for determining a target indication field in the DCI, where the target indication field is used to determine the time domain configuration information.

In an embodiment, the target indication field is:
a frequency domain resource allocation field; or
a bit in the DCI; or
a time domain resource allocation field.

In an embodiment, the second determining unit 410 is used for determining a time domain position at which the terminal receives the DCI, where the time domain position at which the terminal receives the DCI is used to indicate the time domain configuration information.

In an embodiment, the second determining unit 410 is used for determining, based on a first rule, a time domain position of the DCI,
where the first rule is a mapping relationship between the time domain position at which the terminal receives the DCI and the time domain configuration information.

In an embodiment, the second sending unit 420 is further used for sending, to the terminal, first indication information used to indicate that the DCI includes the time domain configuration information.

In an embodiment, the second determining unit 410 is used for determining a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the second sending unit 420 is further used for sending first configuration information and/or second configuration information to the terminal, where the first configuration information is used to indicate the time domain configuration information, and the second configuration information is used to indicate a frequency domain resource corresponding to the data transmission.

In an embodiment, the second sending unit 420 is further used for sending, to the terminal, a radio resource control (RRC) signaling used to indicate a first time period, where the first time period is used by the terminal to determine a time unit corresponding to the time domain configuration information.

Methods and apparatuses provided by each embodiment of the present application are based on the same concept. Since principles of solving problems by a method for time domain information indication performed by a network device and an apparatus for time domain information indication for use in a network device are similar and may achieve the same effects, implementation of the apparatus and the method may refer to each other and repetitions are not repeated.

The division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

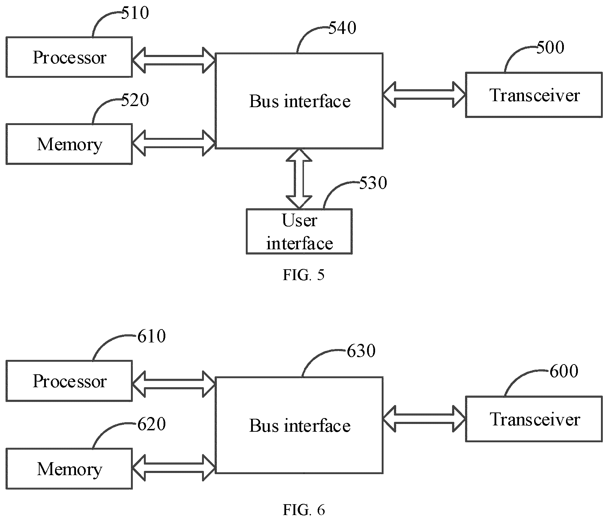

FIG. 5 is a schematic structural diagram of a terminal according to an embodiment of the present application. As shown in FIG. 5, the terminal includes a memory 520, a transceiver 500, and a processor 510, where the processor 510 and the memory 520 may also be arranged physically separately.

The memory 520 is used for storing a computer program, the transceiver 500 is used for receiving and sending data under control of the processor 510, and the processor 510 calls the computer program stored in the memory 520 to perform operations corresponding to the method for time domain information indication performed by a terminal provided by any embodiment of the present application based on an obtained executable instruction, for example:
receiving downlink control information (DCI) sent from a network device; and
determining time domain configuration information based on the DCI, where the time domain configuration information is used to indicate a transmission direction corresponding to a time unit or whether a time unit is configured with a sub-band.

In an embodiment, the transceiver 500 is used for receiving and sending data under control of the processor 510.

In FIG. 5, a bus interface 540 may include any number of interconnected buses and bridges, which are linked together through various circuits of one or more processors represented by the processor 510 and one or more memories represented by the memory 520. The bus interface 540 may also link together various other circuits, such as peripherals, voltage regulators, and power management circuits, etc., which are well known in the art, and therefore are not further described in the present application. The bus interface provides an interface. The transceiver 500 may include multiple elements, i.e., including a transmitter and a receiver, units for providing communication with various other devices over transmission media including wireless channels, wired channels, fiber optic cables, and the like. For different terminals, a user interface 530 may also be included. The user interface 530 may also be an interface capable of externally or internally connecting the required device, and the connected device includes, but not limited to, a keypad, a display, a speaker, a microphone, a joystick, and the like.

The processor 510 is responsible for managing a bus architecture and general processing, and the memory 520 may store data used by the processor 510 when performing operations.

In an embodiment, the processor 510 may be a central processing unit (CPU), an application specific integrated circuit (ASIC), a field-programmable gate array (FPGA), or a complex programmable logic device (CPLD), the processor may also use a multi-core architecture.

In an embodiment, determining the time domain configuration information based on the DCI includes:
determining the time domain configuration information based on a target indication field in the DCI.

In an embodiment, the target indication field is:
a frequency domain resource allocation field; or
a bit in the DCI; or
a time domain resource allocation field.

In an embodiment, determining the time domain configuration information based on the DCI includes:
determining the time domain configuration information based on a time domain position at which the terminal receives the DCI.

In an embodiment, determining the time domain configuration information based on the time domain position at which the terminal receives the DCI includes:
determining, based on a first rule, time domain configuration information corresponding to the time domain position of the DCI,
where the first rule is a mapping relationship between the time domain position at which the terminal receives the DCI and the time domain configuration information.

In an embodiment, before determining the time domain configuration information based on the DCI, the operations further include:
determining, based on first indication information, that the DCI includes the time domain configuration information.

In an embodiment, determining the time domain configuration information based on the DCI includes:
determining the time domain configuration information based on a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, determining the time domain configuration information based on the data transmission direction and the data transmission information scheduled by the DCI includes at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and a sub-band, determining the time domain configuration information based on the target information, where the sub-band is determined based on first configuration information, and a transmission direction of the sub-band is a second transmission direction.

In an embodiment, in case that the data transmission scheduled by the DCI is the first transmission direction and the category of the symbol where the data transmission is located is the second transmission direction, determining the time domain configuration information based on the first configuration information sent from the network device includes:
in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message; and
in case that the data transmission scheduled by the DCI is the first transmission direction, the category of the symbol where the data transmission is located is the first transmission direction, and the resource conflict exists between the data transmission and the sub-band, determining the time domain configuration information based on the target information includes:
   in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

In an embodiment, the operations further include:
determining, based on second indication information, a time unit in which the time domain configuration information is valid.

In an embodiment, the second indication information includes any or any combination of the following:
a first time period indicated by a first radio resource control (RRC) signaling sent from the network device;
a second time period agreed by a protocol; or
a time period corresponding to a transmission scheduled by the DCI.

The above-mentioned terminal provided by the embodiment of the present application can implement all the method steps implemented by the above-mentioned embodiment of the method for time domain information indication performed by a terminal, and may achieve the same effect. The parts and beneficial effects of this embodiment that are the same as the method embodiment are not described in detail here.

FIG. 6 is a schematic structural diagram of a network device according to an embodiment of the present application. As shown in FIG. 6, the network device includes a memory 620, a transceiver 600 and a processor 610,
where the memory 620 is used for storing a computer program, the transceiver 600 is used for receiving and sending data under control of the processor 610, and the processor 610 is used for reading the computer program in the memory 620 and performing the following operations:
determining downlink control information (DCI); and
sending the DCI to a terminal,
where the DCI is used by the terminal to determine time domain configuration information, and the time domain configuration information is used to indicate a transmission direction corresponding to a time unit or whether a time unit is configured with a sub-band.

In an embodiment, the transceiver 600 is used for receiving and sending data under control of the processor 610.

In FIG. 6, a bus architecture may include any number of interconnected buses and bridges, which are linked together through various circuits of one or more processors represented by the processor 610 and one or more memories represented by the memory 620. The bus architecture may also link together various other circuits, such as peripherals, voltage regulators, and power management circuits, etc., which are well known in the art, and therefore are not further described in the present application. A bus interface 630 provides an interface. The transceiver 600 may include multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

In an embodiment, determining the DCI includes:
determining a target indication field in the DCI, where the target indication field is used to determine the time domain configuration information.

In an embodiment, the target indication field is:
a frequency domain resource allocation field; or
a bit in the DCI; or
a time domain resource allocation field.

In an embodiment, determining the DCI includes:
determining a time domain position at which the terminal receives the DCI, where the time domain position at which the terminal receives the DCI is used to indicate the time domain configuration information.

In an embodiment, determining the time domain position at which the terminal receives the DCI includes:
determining, based on a first rule, a time domain position of the DCI,
where the first rule is a mapping relationship between the time domain position at which the terminal receives the DCI and the time domain configuration information.

In an embodiment, the operations further include:
sending, to the terminal, first indication information used to indicate that the DCI includes the time domain configuration information.

In an embodiment, determining the DCI includes:
determining a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the operations further include: sending first configuration information and/or second configuration information to the terminal, where the first configuration information is used to indicate the time domain configuration information, and the second configuration information is used to indicate a frequency domain resource corresponding to the data transmission.

In an embodiment, the operations further include: sending, to the terminal, a radio resource control (RRC) signaling used to indicate a first time period, where the first time period is used by the terminal to determine a time unit corresponding to the time domain configuration information.

An embodiment of the present application further provides a processor-readable storage medium, where the processor-readable storage medium stores a computer program, and the computer program is used to cause a processor to perform the method for time domain information indication performed by a terminal provided by the above embodiments, including:
receiving downlink control information (DCI) sent from a network device; and
determining time domain configuration information based on the DCI, where the time domain configuration information is used to indicate a transmission direction corresponding to a time unit or whether a time unit is configured with a sub-band.

In an embodiment, determining the time domain configuration information based on the DCI includes:
determining the time domain configuration information based on a target indication field in the DCI.

In an embodiment, the target indication field is:
a frequency domain resource allocation field; or
a bit in the DCI; or
a time domain resource allocation field.

In an embodiment, determining the time domain configuration information based on the DCI includes:
determining the time domain configuration information based on a time domain position at which the terminal receives the DCI.

In an embodiment, determining the time domain configuration information based on the time domain position at which the terminal receives the DCI includes:
determining, based on a first rule, time domain configuration information corresponding to the time domain position of the DCI,
where the first rule is a mapping relationship between the time domain position at which the terminal receives the DCI and the time domain configuration information.

In an embodiment, before determining the time domain configuration information based on the DCI, the method further includes:
determining, based on first indication information, that the DCI includes the time domain configuration information.

In an embodiment, determining the time domain configuration information based on the DCI includes:
determining the time domain configuration information based on a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, determining the time domain configuration information based on the data transmission direction and the data transmission information scheduled by the DCI includes at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and a sub-band, determining the time domain configuration information based on the target information, where the sub-band is determined based on first configuration information, and a transmission direction of the sub-band is a second transmission direction.

In an embodiment, in case that the data transmission scheduled by the DCI is the first transmission direction and the category of the symbol where the data transmission is located is the second transmission direction, determining the time domain configuration information based on the first configuration information sent from the network device includes:
in case that the DCI is used to schedule an uplink transmission, and the target information indicates that a category of a symbol where the uplink transmission is located is downlink, determining the time domain configuration information based on the first configuration information, where the first configuration information is sent from the network device to the terminal through a radio resource control (RRC) message; and
in case that the data transmission scheduled by the DCI is the first transmission direction, the category of the symbol where the data transmission is located is the first transmission direction, and the resource conflict exists between the data transmission and the sub-band, determining the time domain configuration information based on the target information includes:
   in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

In an embodiment, the method further includes:
determining, based on second indication information, a time unit in which the time domain configuration information is valid.

In an embodiment, the second indication information includes any or any combination of the following:
a first time period indicated by a first radio resource control (RRC) signaling sent from the network device;
a second time period agreed by a protocol; or
a time period corresponding to a transmission scheduled by the DCI.

An embodiment of the present application further provides a processor-readable storage medium, where the processor-readable storage medium stores a computer program, and the computer program is used to cause a processor to perform the time domain information indication method performed by a network device provided by the above embodiments, including:
determining downlink control information (DCI); and
sending the DCI to a terminal,
where the DCI is used by the terminal to determine time domain configuration information, and the time domain configuration information is used to indicate a transmission direction corresponding to a time unit or whether a time unit is configured with a sub-band.

In an embodiment, determining the DCI includes:
determining a target indication field in the DCI, where the target indication field is used to determine the time domain configuration information.

In an embodiment, the target indication field is:
a frequency domain resource allocation field; or
a bit in the DCI; or
a time domain resource allocation field.

In an embodiment, determining the DCI includes:
determining a time domain position at which the terminal receives the DCI, where the time domain position at which the terminal receives the DCI is used to indicate the time domain configuration information.

In an embodiment, determining the time domain position at which the terminal receives the DCI includes:
determining, based on a first rule, a time domain position of the DCI,
where the first rule is a mapping relationship between the time domain position at which the terminal receives the DCI and the time domain configuration information.

In an embodiment, the method further includes:
sending, to the terminal, first indication information used to indicate that the DCI includes the time domain configuration information.

In an embodiment, determining the DCI includes:
determining a data transmission direction and data transmission information scheduled by the DCI.

In an embodiment, the data transmission information includes:
a category of a symbol where a data transmission is located; and/or
a frequency domain resource corresponding to a data transmission.

In an embodiment, the category of the symbol where the data transmission is located is determined based on target information, and the target information includes any or any combination of the following:
uplink-downlink configuration common information;
uplink-downlink configuration dedicated information; or
slot format indication (SFI) information.

In an embodiment, the method further includes: sending first configuration information and/or second configuration information to the terminal, where the first configuration information is used to indicate the time domain configuration information, and the second configuration information is used to indicate a frequency domain resource corresponding to the data transmission.

In an embodiment, the method further includes: sending, to the terminal, a radio resource control (RRC) signaling used to indicate a first time period, where the first time period is used by the terminal to determine a time unit corresponding to the time domain configuration information.

The processor-readable storage medium may be any available medium or data storage device that may be accessed by a processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for time domain information indication, performed by a terminal, comprising:
receiving downlink control information, DCI, sent from a network device; and
determining time domain configuration information based on the DCI, wherein the time domain configuration information is used to indicate a transmission direction corresponding to a time unit or whether a time unit is configured with a sub-band.

2. The method of claim 1, wherein determining the time domain configuration information based on the DCI comprises:
determining the time domain configuration information based on a target indication field in the DCI.

3. The method of claim 2, wherein the target indication field is:
a frequency domain resource allocation field; or
a bit in the DCI; or
a time domain resource allocation field.

4. The method of claim 1, wherein determining the time domain configuration information based on the DCI comprises:
determining the time domain configuration information based on a time domain position at which the terminal receives the DCI.

5. The method of claim 4, wherein determining the time domain configuration information based on the time domain position at which the terminal receives the DCI comprises:
determining, based on a first rule, time domain configuration information corresponding to the time domain position of the DCI,
wherein the first rule is a mapping relationship between the time domain position at which the terminal receives the DCI and the time domain configuration information.

6. The method of any one of claims 2 to 5, wherein before determining the time domain configuration information based on the DCI, the method further comprises:
determining, based on first indication information, that the DCI comprises the time domain configuration information.

7. The method of claim 1, wherein determining the time domain configuration information based on the DCI comprises:
determining the time domain configuration information based on a data transmission direction and data transmission information scheduled by the DCI.

8. The method of claim 7, wherein the data transmission information comprises:
a category of a symbol where a data transmission is located; and/or
a frequency domain resource corresponding to a data transmission.

9. The method of claim 7 or 8, wherein the category of the symbol where the data transmission is located is determined based on target information, and the target information comprises any or any combination of the following:
uplink-downlink configuration common information;
uplink-downlink configuration dedicated information; or
slot format indication, SFI, information.

10. The method of claim 9, wherein determining the time domain configuration information based on the data transmission direction and the data transmission information scheduled by the DCI comprises at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and a sub-band, determining the time domain configuration information based on the target information, wherein the sub-band is determined based on first configuration information, and a transmission direction of the sub-band is a second transmission direction.

11. The method of claim 10, wherein in case that the data transmission scheduled by the DCI is the first transmission direction and the category of the symbol where the data transmission is located is the second transmission direction, determining the time domain configuration information based on the first configuration information sent from the network device comprises:
in case that the DCI is used to schedule an uplink transmission, and the target information indicates that a category of a symbol where the uplink transmission is located is downlink, determining the time domain configuration information based on the first configuration information, wherein the first configuration information is sent from the network device to the terminal through a radio resource control, RRC, message; and
wherein in case that the data transmission scheduled by the DCI is the first transmission direction, the category of the symbol where the data transmission is located is the first transmission direction, and the resource conflict exists between the data transmission and the sub-band, determining the time domain configuration information based on the target information comprises:
in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

12. The method of any one of claims 1 to 5 and 7 to 8, further comprising:
determining, based on second indication information, a time unit in which the time domain configuration information is valid.

13. The method of claim 12, wherein the second indication information comprises any or any combination of the following:
a first time period indicated by a first radio resource control, RRC, signaling sent from the network device;
a second time period agreed by a protocol; or
a time period corresponding to a transmission scheduled by the DCI.

14. A method for time domain information indication, performed by a network device, comprising:
determining downlink control information, DCI; and
sending the DCI to a terminal,
wherein the DCI is used by the terminal to determine time domain configuration information, and the time domain configuration information is used to indicate a transmission direction corresponding to a time unit or whether a time unit is configured with a sub-band.

15. The method of claim 14, wherein determining the DCI comprises:
determining a target indication field in the DCI, wherein the target indication field is used to determine the time domain configuration information.

16. The method of claim 15, wherein the target indication field is:
a frequency domain resource allocation field; or
a bit in the DCI; or
a time domain resource allocation field.

17. The method of claim 14, wherein determining the DCI comprises:
determining a time domain position at which the terminal receives the DCI, wherein the time domain position at which the terminal receives the DCI is used to indicate the time domain configuration information.

18. The method of claim 17, wherein determining the time domain position at which the terminal receives the DCI comprises:
determining, based on a first rule, a time domain position of the DCI,
wherein the first rule is a mapping relationship between the time domain position at which the terminal receives the DCI and the time domain configuration information.

19. The method of any one of claims 15 to 18, further comprising:
sending, to the terminal, first indication information used to indicate that the DCI comprises the time domain configuration information.

20. The method of claim 14, wherein determining the DCI comprises:
determining a data transmission direction and data transmission information scheduled by the DCI.

21. The method of claim 20, wherein the data transmission information comprises:
a category of a symbol where a data transmission is located; and/or
a frequency domain resource corresponding to a data transmission.

22. The method of claim 20 or 21, wherein the category of the symbol where the data transmission is located is determined based on target information, and the target information comprises any or any combination of the following:
uplink-downlink configuration common information;
uplink-downlink configuration dedicated information; or
slot format indication, SFI, information.

23. The method of claim 22, further comprising: sending first configuration information and/or second configuration information to the terminal, wherein the first configuration information is used to indicate the time domain configuration information, and the second configuration information is used to indicate a frequency domain resource corresponding to the data transmission.

24. The method of any one of claims 14 to 18 and 20 to 21, further comprising: sending, to the terminal, a radio resource control, RRC, signaling used to indicate a first time period, wherein the first time period is used by the terminal to determine a time unit corresponding to the time domain configuration information.

25. A terminal comprising a memory, a transceiver and a processor,
wherein the memory is used for storing a computer program, the transceiver is used for receiving and sending data under control of the processor, and the processor is used for reading the computer program in the memory and performing the following operations:
receiving downlink control information, DCI, sent from a network device; and
determining time domain configuration information based on the DCI, wherein the time domain configuration information is used to indicate a transmission direction corresponding to a time unit or whether a time unit is configured with a sub-band.

26. The terminal of claim 25, wherein determining the time domain configuration information based on the DCI comprises:
determining the time domain configuration information based on a target indication field in the DCI.

27. The terminal of claim 26, wherein the target indication field is:
a frequency domain resource allocation field; or
a bit in the DCI; or
a time domain resource allocation field.

28. The terminal of claim 26, wherein determining the time domain configuration information based on the DCI comprises:
determining the time domain configuration information based on a time domain position at which the terminal receives the DCI.

29. The terminal of claim 28, wherein determining the time domain configuration information based on the time domain position at which the terminal receives the DCI comprises:
determining, based on a first rule, time domain configuration information corresponding to the time domain position of the DCI,
wherein the first rule is a mapping relationship between the time domain position at which the terminal receives the DCI and the time domain configuration information.

30. The terminal of any one of claims 26 to 29, wherein before determining the time domain configuration information based on the DCI, the operations further comprise:
determining, based on first indication information, that the DCI comprises the time domain configuration information.

31. The terminal of claim 25, wherein determining the time domain configuration information based on the DCI comprises:
determining the time domain configuration information based on a data transmission direction and data transmission information scheduled by the DCI.

32. The terminal of claim 31, wherein the data transmission information comprises:
a category of a symbol where a data transmission is located; and/or
a frequency domain resource corresponding to a data transmission.

33. The terminal of claim 31 or 32, wherein the category of the symbol where the data transmission is located is determined based on target information, and the target information comprises any or any combination of the following:
uplink-downlink configuration common information;
uplink-downlink configuration dedicated information; or
slot format indication, SFI, information.

34. The terminal of claim 33, wherein determining the time domain configuration information based on the data transmission direction and the data transmission information scheduled by the DCI comprises at least one of the following:
in case that a data transmission scheduled by the DCI is a first transmission direction and a category of the symbol where the data transmission is located is a second transmission direction, determining the time domain configuration information based on first configuration information sent from the network device; or
in case that a data transmission scheduled by the DCI is a first transmission direction, a category of the symbol where the data transmission is located is the first transmission direction, and a resource conflict exists between the data transmission and a sub-band, determining the time domain configuration information based on the target information, wherein the sub-band is determined based on first configuration information, and a transmission direction of the sub-band is a second transmission direction.

35. The terminal of claim 34, wherein in case that the data transmission scheduled by the DCI is the first transmission direction and the category of the symbol where the data transmission is located is the second transmission direction, determining the time domain configuration information based on the first configuration information sent from the network device comprises:
in case that the DCI is used to schedule an uplink transmission, and the target information indicates that a category of a symbol where the uplink transmission is located is downlink, determining the time domain configuration information based on the first configuration information, wherein the first configuration information is sent from the network device to the terminal through a radio resource control, RRC, message; and
wherein in case that the data transmission scheduled by the DCI is the first transmission direction, the category of the symbol where the data transmission is located is the first transmission direction, and the resource conflict exists between the data transmission and the sub-band, determining the time domain configuration information based on the target information comprises:
in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

36. The terminal of any one of claims 25 to 29 and 31 to 32, wherein the operations further comprise:
determining, based on second indication information, a time unit in which the time domain configuration information is valid.

37. The terminal of claim 36, wherein the second indication information comprises any or any combination of the following:
a first time period indicated by a first radio resource control, RRC, signaling sent from the network device;
a second time period agreed by a protocol; or
a time period corresponding to a transmission scheduled by the DCI.

38. A network device, comprising a memory, a transceiver and a processor,
wherein the memory is used for storing a computer program, the transceiver is used for receiving and sending data under control of the processor, and the processor is used for reading the computer program in the memory and performing the following operations:
determining downlink control information, DCI; and
sending the DCI to a terminal,
wherein the DCI is used by the terminal to determine time domain configuration information, and the time domain configuration information is used to indicate a transmission direction corresponding to a time unit or whether a time unit is configured with a sub-band.

39. The network device of claim 38, wherein determining the DCI comprises:
determining a target indication field in the DCI, wherein the target indication field is used to determine the time domain configuration information.

40. The network device of claim 39, wherein the target indication field is:
a frequency domain resource allocation field; or
a bit in the DCI; or
a time domain resource allocation field.

41. The network device of claim 38, wherein determining the DCI comprises:
determining a time domain position at which the terminal receives the DCI, wherein the time domain position at which the terminal receives the DCI is used to indicate the time domain configuration information.

42. The network device of claim 41, wherein determining the time domain position at which the terminal receives the DCI comprises:
determining, based on a first rule, a time domain position of the DCI,
wherein the first rule is a mapping relationship between the time domain position at which the terminal receives the DCI and the time domain configuration information.

43. The network device of any one of claims 39 to 42, wherein the operations further comprise:
sending, to the terminal, first indication information used to indicate that the DCI comprises the time domain configuration information.

44. The network device of claim 38, wherein determining the DCI comprises:
determining a data transmission direction and data transmission information scheduled by the DCI.

45. The network device of claim 44, wherein the data transmission information comprises:
a category of a symbol where a data transmission is located; and/or
a frequency domain resource corresponding to a data transmission.

46. The network device of claim 44 or 45, wherein the category of the symbol where the data transmission is located is determined based on target information, and the target information comprises any or any combination of the following:
uplink-downlink configuration common information;
uplink-downlink configuration dedicated information; or
slot format indication, SFI, information.

47. The network device of claim 46, wherein the operations further comprise: sending first configuration information and/or second configuration information to the terminal, wherein the first configuration information is used to indicate the time domain configuration information, and the second configuration information is used to indicate a frequency domain resource corresponding to the data transmission.

48. The network device of any one of claims 38 to 42 and 44 to 45, wherein the operations further comprise: sending, to the terminal, a radio resource control, RRC, signaling used to indicate a first time period, wherein the first time period is used by the terminal to determine a time unit corresponding to the time domain configuration information.

49. An apparatus for time domain information indication, for use in a terminal, comprising:
a first receiving unit, used for receiving downlink control information, DCI, sent from a network device; and
a first determining unit, used for determining time domain configuration information based on the DCI, wherein the time domain configuration information is used to indicate a transmission direction corresponding to a time unit or whether a time unit is configured with a sub-band.

50. The apparatus of claim 49, wherein the first determining unit is used for determining the time domain configuration information based on a target indication field in the DCI.

51. The apparatus of claim 50, wherein the target indication field is:
a frequency domain resource allocation field; or
a bit in the DCI; or
a time domain resource allocation field.

52. The apparatus of claim 49, wherein the first determining unit is used for determining the time domain configuration information based on a time domain position at which the terminal receives the DCI.

53. The apparatus of claim 52, wherein the first determining unit is used for determining, based on a first rule, time domain configuration information corresponding to the time domain position of the DCI,
wherein the first rule is a mapping relationship between the time domain position at which the terminal receives the DCI and the time domain configuration information.

54. The apparatus of any one of claims 50 to 53, wherein the first determining unit is further used for determining, based on first indication information, that the DCI comprises the time domain configuration information before determining the time domain configuration information based on the DCI.

55. The apparatus of claim 49, wherein the first determining unit is used for determining the time domain configuration information based on a data transmission direction and data transmission information scheduled by the DCI.

56. The apparatus of claim 55, wherein the data transmission information comprises:
a category of a symbol where a data transmission is located; and/or
a frequency domain resource corresponding to a data transmission.

57. The apparatus of claim 55 or 56, wherein the category of the symbol where the data transmission is located is determined based on target information, and the target information comprises any or any combination of the following:
uplink-downlink configuration common information;
uplink-downlink configuration dedicated information; or
slot format indication, SFI, information.

58. The apparatus of claim 57, wherein the first determining unit is used for, in case that a data transmission scheduled by the DCI is a first transmission direction and a category of the symbol where the data transmission is located is a second transmission direction, determining the time domain configuration information based on first configuration information sent from the network device; and/or
the first determining unit is used for, in case that a data transmission scheduled by the DCI is a first transmission direction, a category of the symbol where the data transmission is located is the first transmission direction, and a resource conflict exists between the data transmission and a sub-band, determining the time domain configuration information based on the target information, wherein the sub-band is determined based on first configuration information, and a transmission direction of the sub-band is a second transmission direction.

59. The apparatus of claim 58, wherein the first determining unit is used for, in case that the DCI is used to schedule an uplink transmission, and the target information indicates that a category of a symbol where the uplink transmission is located is downlink, determining the time domain configuration information based on the first configuration information, wherein the first configuration information is sent from the network device to the terminal through a radio resource control, RRC, message; and/or
the first determining unit is used for, in case that the DCI is used to schedule a downlink reception, the target information indicates that a category of a symbol where the downlink reception is located is downlink, and a resource conflict exists between a frequency domain resource corresponding to the downlink reception and a frequency domain resource corresponding to an uplink sub-band, determining the time domain configuration information based on the target information.

60. The apparatus of any one of claims 49 to 53 and 55 to 56, wherein the first determining unit is further used for determining, based on second indication information, a time unit in which the time domain configuration information is valid.

61. The apparatus of claim 60, wherein the second indication information comprises any or any combination of the following:
a first time period indicated by a first radio resource control, RRC, signaling sent from the network device;
a second time period agreed by a protocol; or
a time period corresponding to a transmission scheduled by the DCI.

62. An apparatus for time domain information indication, for use in a network device, comprising:
a second determining unit, used for determining downlink control information, DCI; and
a second sending unit, used for sending the DCI to a terminal,
wherein the DCI is used by the terminal to determine time domain configuration information, and the time domain configuration information is used to indicate a transmission direction corresponding to a time unit or whether a time unit is configured with a sub-band.

63. The apparatus of claim 62, wherein the second determining unit is used for determining a target indication field in the DCI, wherein the target indication field is used to determine the time domain configuration information.

64. The apparatus of claim 63, wherein the target indication field is:
a frequency domain resource allocation field; or
a bit in the DCI; or
a time domain resource allocation field.

65. The apparatus of claim 62, wherein the second determining unit is used for determining a time domain position at which the terminal receives the DCI, wherein the time domain position at which the terminal receives the DCI is used to indicate the time domain configuration information.

66. The apparatus of claim 65, wherein the second determining unit is used for determining, based on a first rule, a time domain position of the DCI,
wherein the first rule is a mapping relationship between the time domain position at which the terminal receives the DCI and the time domain configuration information.

67. The apparatus of any one of claims 63 to 66, wherein the second sending unit is further used for sending, to the terminal, first indication information used to indicate that the DCI comprises the time domain configuration information.

68. The apparatus of claim 62, wherein the second determining unit is used for determining a data transmission direction and data transmission information scheduled by the DCI.

69. The apparatus of claim 68, wherein the data transmission information comprises:
a category of a symbol where a data transmission is located; and/or
a frequency domain resource corresponding to a data transmission.

70. The apparatus of claim 68 or 69, wherein the category of the symbol where the data transmission is located is determined based on target information, and the target information comprises any or any combination of the following:
uplink-downlink configuration common information;
uplink-downlink configuration dedicated information; or
slot format indication, SFI, information.

71. The apparatus of claim 70, wherein the second sending unit is further used for sending first configuration information and/or second configuration information to the terminal, wherein the first configuration information is used to indicate the time domain configuration information, and the second configuration information is used to indicate a frequency domain resource corresponding to the data transmission.

72. The apparatus of any one of claims 62 to 66 and 68 to 69, wherein the second sending unit is further used for sending, to the terminal, a radio resource control, RRC, signaling used to indicate a first time period, wherein the first time period is used by the terminal to determine a time unit corresponding to the time domain configuration information.

73. A processor-readable storage medium, wherein the processor-readable storage medium stores a computer program, and the computer program is used to cause a processor to perform the method of any one of claims 1 to 13.

74. A processor-readable storage medium, wherein the processor-readable storage medium stores a computer program, and the computer program is used to cause a processor to perform the method of any one of claims 14 to 24.
